# FASCICULE DE BREVET EUROPEEN

(11) **EP 2 888 861 B1**
(45) Date de publication et mention de la délivrance du brevet: **30.09.2020**
(21) Numéro de dépôt: 13773288.9
(22) Date de dépôt: 19.08.2013
(51) Int. Cl.: H04L 29/06, H04L 29/08, A63F 13/31, A63F 13/355, A63F 13/92

(54) **ACCÈS A DISTANCE A DES CONTENUS A PARTIR D'UN CLIENT LÉGER**
FERNDATAZUGANG AUS EINEM THIN CLIENT
REMOTE CONTENT ACCESS FROM A THIN CLIENT

(30) Priorité: 21.08.2012 FR 1257902
(43) Date de publication de la demande: 01.07.2015
(73) Titulaire: ORANGE, 75015 Paris (FR)
(72) Inventeur: LACHARME, Sandrine, F-22300 Lannion (FR); BAUMANN, Maximilien, 78180 Montigny-le-Bretonneux (FR)
(86) Numéro de dépôt international: PCT/FR2013/051948
(87) Numéro de publication internationale: WO 2014/029944

(56) Documents cités:
- EP-A2- 2 375 327
- US-A1- 2009 132 737
- US-A1- 2009 235 342
- US-A1- 2010 281 107
- US-A1- 2011 145 694
- US-A1- 2012 158 984
- ANANTHARAMAN NARAYANA IYER ET AL: "Extending Android Application Programming Framework for Seamless Cloud Integration", MOBILE SERVICES (MS), 2012 IEEE FIRST INTERNATIONAL CONFERENCE ON, IEEE, 24 juin 2012 (2012-06-24), pages 96-104, XP032220514, DOI: 10.1109/MOBSERV.2012.22 ISBN: 978-1-4673-2881-4
- CHRISTIAN WILLEMS ET AL: "A distributed virtual laboratory architecture for cybersecurity training", INTERNET TECHNOLOGY AND SECURED TRANSACTIONS (ICITST), 2011 INTERNATIONAL CONFERENCE FOR, IEEE, 11 décembre 2011 (2011-12-11), pages 408-415, XP032113193, ISBN: 978-1-4577-0884-8
- PERKINS UNIVERSITY OF GLASGOW M WESTERLUND ERICSSON J OTT AALTO UNIVERSITY C: "Web Real-Time Communication (WebRTC): Media Transport and Use of RTP; draft-ietf-rtcweb-rtp-usage-03.txt", WEB REAL-TIME COMMUNICATION (WEBRTC): MEDIA TRANSPORT AND USE OF RTP; DRAFT-IETF-RTCWEB-RTP-USAGE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 5 juin 2012 (2012-06-05), pages 1-61, XP015083160,
- Dutton S.: "Getting started with WebRTC", HTML5 Rocks tutorials , 23 juillet 2012 (2012-07-23), XP002698553, Extrait de l'Internet: URL:http://www.html5rocks.com/en/tutorials /webrtc/basics/ [extrait le 2013-06-07]
- Burnett D. , Narayanan A.: "Getting access to local devices that can generate multimedia streams", W3c , 22 décembre 2011 (2011-12-22), XP002698554, Extrait de l'Internet: URL:http://dev.w3.org/2011/webrtc/editor/g etusermedia.html [extrait le 2013-06-07]

## Description

L'invention concerne l'accès à distance à des contenus à partir d'un client léger, notamment un navigateur internet, d'un terminal de communication. En particulier, l'invention sera mise en œuvre dans le cadre de navigateur internet utilisant le langage HTML 5.0.

L'accès à des contenus à distance peut être réalisé via une application spécifique qui sera téléchargée sur un terminal de communication d'un client. Cette application permet au terminal de communication, sur lequel elle est implémentée, de dialoguer avec soit un autre terminal de communication distant, soit une plateforme de fourniture d'accès à des contenus. La demande de brevet américaine US2009235342 propose un procédé d'accès à au moins un bureau d'un deuxième terminal à partir d'un premier terminal de communication distant. Le bureau est transmis du deuxième terminal vers le premier terminal sous forme de données du bureau. Et, la demande de brevet européenne propose une distribution de ressource cloud pour téléphone mobile, en particulier, pour l'accès à un service IPTV. L'inconvénient de telles applications est qu'il doit être développées autant de versions qu'il existe de système d'exploitation afin qu'elle soit compatible avec le terminal la téléchargeant. En outre, elle occupe de l'espace mémoire sur le terminal et engendre sur celui-ci des coûts de calculs.

La demande de brevet américaine US2009/235342 divulgue un procédé d'accès à un bureau distant. La demande de brevet américaine US2009132737 propose une interface distante comportant une interface réseau configurée pour communiquer avec un hôte distant, une interface de périphérique configurée pour se connecter avec un périphérique. Le mécanisme de fourniture d'interface de l'interface distant coopère avec l'interface réseau pour transférer l'interface de périphérique au port de connexion du périphérique distant de l'hôte. Les échanges sont effectués en utilisant le protocole de communication UPnP. Le problème est que les données échangées nécessitent un transcodage pour être utilisées par le périphérique distant.

Une option plus générique est de permettre l'accès à de tels contenus à partir d'un client léger tel qu'un navigateur internet. Par exemple, la demande de brevet américaine US2010281107 propose un système client-server, le système permettant un service de communications utilisant des applications Web distribué (c'est-à-dire des client légers). Le document propose des clients légers HTML 5 permettant une participation transparente sans nécessiter de changement de server ou de code d'application client ([0014]). Cette participation transparente divulgue juste le fait qu'il n'est pas nécessaire, en réception, de transcoder en plus les données utiles de la communication puisque le codage est inclus dans le protocole WebRTC qui code en émission et décode en réception en utilisant un codage prévu par le protocole et donc inclus dans les clients WebRTC. Aujourd'hui, l'accès à de tels contenus à partir d'un client léger nécessite un transcodage du contenu pour l'adapter au langage utilisé par le client léger voire au protocole de communication utilisé pour le transmettre lorsque le client peut supporter le contenu. Ainsi, la plateforme de fourniture d'accès au contenu nécessite de disposer d'au moins des moyens de transcodage pour adapter le contenu au protocole de communication et aux capacités de restitution vidéo du client léger récepteur, et le client léger doit fournir à la plateforme de fourniture d'accès les paramètres de protocole de communication et de capacités de restitution vidéo qu'il utilise.

Un des buts de la présente invention est d'apporter des améliorations par rapport à l'état de la technique.

Un objet de l'invention est un procédé d'accès à partir d'un client léger d'un terminal de communication distant. Le procédé d'accès est configuré pour accéder au moyen du client léger du terminal de communication distant à un contenu mis à disposition par un dispositif de fourniture d'accès à des contenus, ledit contenu étant exécuté par un dispositif de fourniture d'accès à des contenus d'un réseau de communication, à partir d'un client léger d'un terminal de communication distant. Ledit procédé d'accès comporte :
- une réception par ledit client léger du terminal de communication distant d'au moins un signal de reproduction d'un contenu du dispositif de fourniture d'accès à des contenus via le réseau de communication,
   ∘ ledit signal de reproduction du contenu étant reçu , via le réseau de communication, d'un module leurre du dispositif de fourniture d'accès au contenu par le client léger du terminal de communication distant pendant une session de communication entre le terminal de communication distant et ledit dispositif de fourniture d'accès au contenu,
   ∘ ledit signal de reproduction du contenu étant produit par un module d'exécution dudit dispositif de fourniture d'accès au contenu pendant l'exécution du contenu et
   ∘ ledit signal de reproduction du contenu étant fourni par le module d'exécution pour être reproduit par le module leurre agissant comme un périphérique de reproduction virtuel et étant relayé, sans traitement par le module leurre dudit dispositif de fourniture d'accès à des contenus, au client léger du terminal de communication distant, ledit module leurre étant enregistré comme un périphérique de reproduction virtuel auprès dudit dispositif de fourniture d'accès à des contenus dans une base de données d'enregistrement du dispositif de fourniture d'accès à des contenus
- une reproduction, par ledit client léger du terminal de communication distant, du signal de reproduction du contenu reçu.

Ainsi, le protocole de communication utilisé pour transmettre le signal de reproduction du contenu est connu à la fois du coté de la plateforme de fourniture d'accès et du terminal de communication puisqu'il est utilisé pour des sessions de communications audio/vidéo classiques à savoir de la téléphonie ou visiophonie via le client léger par le terminal de communication. Par exemple, il s'agit du WebRTC développé pour permettre les communications audio/vidéo via HTML 5.0.

En outre, l'enregistrement du module leurre relayant le signal de reproduction comme périphérique de reproduction virtuel permet au client léger du terminal de recevoir le signal de reproduction sans transcodage puisque tout ce passe comme si le module leurre était un périphérique local d'un module de communication établissant la session de communication.

Avantageusement, ledit au moins un signal de reproduction comporte un signal vidéo ou un signal audio.

Ainsi, ce procédé peut être appliqué soit sur un contenu vidéo, soit sur un contenu audio, soit en parallèle sur le signal vidéo et le signal audio d'un contenu.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un client léger d'un terminal de communication, et étant conçus pour commander l'exécution des différentes étapes de ce procédé.

L'invention vise donc aussi un programme comprenant des instructions de code de programme pour l'exécution des étapes du procédé d'accès lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore un procédé de fourniture d'accès à au moins un contenu à un client léger d'un terminal de communication distant. Le procédé de fourniture d'accès est apte à fournit l'accès au contenu par un dispositif de fourniture d'accès à des contenus d'un réseau de communication, ledit dispositif de fourniture d'accès à des contenus exécutant ledit contenu, ledit procédé de fourniture d'accès comportant
- une exécution d'un contenu par un module d'exécution du dispositif de fourniture d'accès à des contenus pour produire un signal de reproduction du contenu
- une émission du signal de reproduction du contenu au client léger du terminal de communication distant du signal de reproduction du contenu par le dispositif de fourniture d'accès à des contenus via le réseau de communication,
le signal de reproduction du contenu étant fourni, via la réseau de communication par un module leurre du dispositif de fourniture d'accès au contenu au client léger du terminal de communication distant pendant une session de communication entre le terminal de communication distant et le dispositif de fourniture d'accès au contenu,
le signal de reproduction du contenu étant fourni par le module d'exécution pour être reproduit par le module leurre agissant comme un périphérique de reproduction virtuel; et
l'émission relayant, sans traitement par le module leurre du dispositif de fourniture d'accès à des contenus, vers ledit client léger du terminal de communication distant le signal de reproduction du contenu via le réseau de communication, ledit module leurre étant enregistré comme un périphérique de reproduction virtuel auprès dudit dispositif de fourniture d'accès à des contenus dans une base de données d'enregistrement du dispositif de fourniture d'accès à des contenus, le signal de reproduction relayé étant reproduit par le client léger du terminal de communication distant.

Avantageusement, le procédé de fourniture d'accès comporte une fourniture audit client léger du terminal de communication distant une liste des contenus auxquels ledit dispositif de fourniture d'accès fournit un accès audit client léger permettant une sélection d'au moins un contenu par ledit client léger pour requérir l'accès au contenu sélectionné auprès dudit dispositif de fourniture d'accès à des contenus.

Ainsi, en utilisant le protocole de requête du client léger, le dispositif de fourniture d'accès peut en réponse à une requête de fourniture d'accès à des contenus répondre renvoyé une page internet avec une liste de contenu. La sélection d'un contenu dans cette liste déclenchera l'envoi par le client léger d'une requête d'accès au contenu sélectionné en utilisant par exemple le protocole HTML 5.0.

Avantageusement, le procédé de fourniture d'accès comporte une réception d'une requête d'accès à un contenu dudit dispositif de fourniture d'accès à des contenus, ladite requête d'accès déclenchant une exécution dudit contenu par ledit module d'exécution produisant ledit signal de reproduction.

Ainsi, c'est le client léger qui déclenche l'exécution du contenu par le dispositif de fourniture d'accès. Le client léger garde la maîtrise de l'exécution comme si le contenu était exécuté en local tout en déportant les coûts de calcul du coté du dispositif de fourniture d'accès.

Avantageusement, le procédé de fourniture d'accès comporte une recherche d'un périphérique pour la reproduction dudit signal de reproduction produit par le module d'exécution intégrant le module leurre dans la chaine de reproduction.

Ainsi, en raison de son enregistrement comme périphérique de reproduction virtuel, le module leurre est sélectionné pour la reproduction de contenu dont la requête est effectué par un terminal de communication distant.

Avantageusement, ledit procédé de fourniture d'accès comporte une intégration dudit module leurre dans la chaine de reproduction du signal de reproduction produit par ledit module d'exécution, ladite intégration du module leurre déclenchant un établissement de ladite session de communication entre ledit client léger et ledit dispositif de fourniture d'accès.

Ainsi, le module leurre peut relayer le signal de reproduction en étant considéré par le module d'exécution du contenu comme un périphérique de reproduction virtuel et par un module de communication établissant la session de communication comme un périphérique source local.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un dispositif de fourniture d'accès et étant conçus pour commander l'exécution des différentes étapes de ce procédé.

L'invention vise donc aussi un programme comprenant des instructions de code de programme pour l'exécution des étapes du procédé de fourniture d'accès lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est un procédé d'installation d'un dispositif de fourniture d'accès à des contenus, ledit dispositif de fourniture d'accès étant apte à :
- établir une session de communication avec un client léger d'un terminal de communication via un réseau de communication, et
- exécuter un contenu.
Ledit procédé d'installation comporte un enregistrement d'un module leurre auprès dudit dispositif de fourniture d'accès comme périphérique de reproduction virtuel auprès dudit dispositif de fourniture d'accès à des contenus dans une base de données d'enregistrement du dispositif de fourniture d'accès à des contenus, ledit module leurre étant apte à relayer, sans traitement par le module leurre du dispositif de fourniture d'accès à des contenus, un signal de reproduction d'un contenu vers un client léger d'un terminal de communication distant via le réseau de communication pendant une session de communication entre ledit dispositif de fourniture d'accès au contenu et ledit client léger du terminal distant, le signal de reproduction du contenu étant produit par un module d'exécution dudit dispositif de fourniture d'accès exécutant le contenu, le module d'exécution étant configuré pour fournir le signal de reproduction du contenu au module leurre pour être reproduit par le module leurre agissant comme un périphérique de reproduction virtuel.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif de fourniture d'accès à des contenus et étant conçus pour commander l'exécution des différentes étapes de ce procédé.

L'invention vise donc aussi un programme comprenant des instructions de code de programme pour l'exécution des étapes du procédé d'installation lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un module leurre d'un dispositif de fourniture d'accès à des contenus, le dispositif de fourniture d'accès étant apte à fournir l'accès à au moins un contenu à un client léger d'un terminal de communication distant d'un réseau de communication, ledit dispositif de fourniture d'accès à des contenus exécutant ledit contenu, le module leurre comportant :
- des moyens d'enregistrement dudit module leurre auprès d'un dispositif de fourniture d'accès à des contenus comme périphérique de reproduction virtuel auprès dudit dispositif de fourniture d'accès à des contenus dans une base de données d'enregistrement du dispositif de fourniture d'accès à des contenus, et
- des moyens d'émission d'un signal de reproduction du contenu à un client léger d'un terminal de communication distant d'un signal de reproduction d'un contenu par le dispositif de fourniture d'accès à des contenus via un réseau de communication,
le signal de reproduction du contenu étant fourni, via le réseau de communication par un module leurre du dispositif de fourniture d'accès au contenu au client léger du terminal de communication distant pendant une session de communication entre le terminal de communication distant et le dispositif de fourniture d'accès au contenu, le signal de reproduction du contenu étant fourni par un module d'exécution pour être reproduit par le module leurre agissant comme un périphérique de reproduction virtuel; et
les moyens d'émission étant apte à relayer, sans traitement par le module leurre du dispositif de fourniture d'accès à des contenus, le signal de reproduction du contenu au client léger du terminal de communication distant via le réseau de communication, le signal de reproduction relayé étant reproduit par le client léger du terminal de communication distant.

Un objet de l'invention est un dispositif de fourniture d'accès à des contenus apte à fournir l'accès à au moins un contenu à un client léger d'un terminal de communication distant par un dispositif de fourniture d'accès à des contenus d'un réseau de communication, ledit dispositif de fourniture d'accès à des contenus exécutant ledit contenu, le dispositif de fourniture d'accès à des contenus comportant :
- un module d'exécution d'au moins un contenu produisant au moins un signal de reproduction dudit contenu et
- un module leurre enregistré comme périphérique de reproduction virtuel auprès dudit dispositif de fourniture d'accès dans une base de données d'enregistrement du dispositif de fourniture d'accès à des contenus, ledit module leurre étant apte à relayer, sans traitement par le module leurre du dispositif de fourniture d'accès à des contenus, ledit signal de reproduction du contenu vers le client léger du terminal de communication via le réseau de communication via le réseau de communication pendant une session de communication entre ledit client léger et ledit dispositif de fourniture d'accès, le signal de reproduction du contenu étant fourni par le module d'exécution pour être reproduit par le module leurre agissant comme un périphérique de reproduction virtuel.

Les caractéristiques et avantages de l'invention apparaîtront plus clairement à la lecture de la description, faite à titre d'exemple, et des figures s'y rapportant qui représentent :
- Figure 1, un schéma simplifié d'un procédé d'accès selon l'invention,
- Figure 2, un schéma simplifié d'un procédé de fourniture d'accès selon l'invention,
- Figure 3, un diagramme des échanges lors de la mise en œuvre des procédés selon l'invention,
- Figure 4, une architecture de communication mettant en œuvre l'invention.

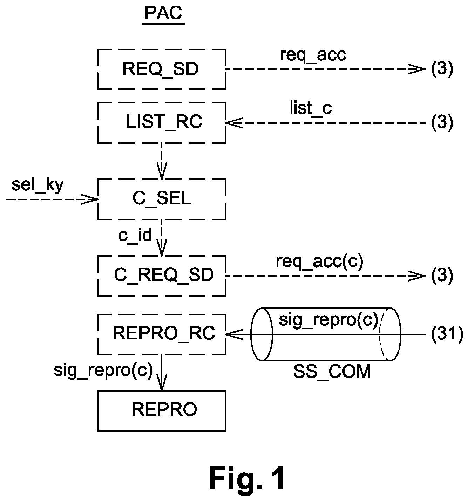

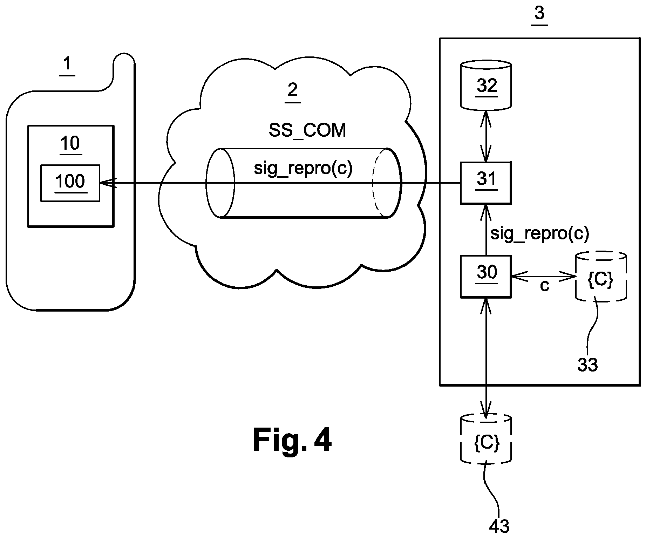

L'invention permet de fournir une diffusion de contenus (audio, vidéo, jeu) localisés dans le réseau domestiques des clients en nomadisme à travers un client léger intégrant un module de communication, tel que le navigateur HTML 5.0 intégrant une API WebRTC. L'avantage pour le client réside dans le fait qu'il n'a pas à installer de procédé ou module spécifique sur son terminal de communication mobile pour bénéficier de cet accès. La figure 1 illustre un schéma simplifié d'un procédé d'accès PAC selon l'invention. Le procédé d'accès PAC à au moins un contenu permet d'accéder audit contenu à partir d'un client léger (illustré sur la figure 4, client léger 10) d'un terminal de communication distant (illustré sur la figure 4, terminal 1) dudit contenu C. Ledit contenu C auquel accède le client léger 1 0 est exécuté par un dispositif 3 de fourniture d'accès à des contenus d'un réseau de communication (illustré sur la figure 4, réseau 2).Le procédé d'accès PAC comporte une reproduction REPRO par ledit client léger 10 d'au moins un signal de reproduction d'un contenu sig_repro (c).Le signal de reproduction sig_repro (c) reçu REPRO_RC par le client léger 10 pendant une session de communication SS_COM avec ledit dispositif 3 de fourniture d'accès à des contenus étant produit par un module d'exécution (illustré sur la figure 4, module 30) dudit dispositif 3 de fourniture d'accès à des contenus et relayé sans traitement par un module leurre (illustré sur la figure 4, module 31) dudit dispositif 3 de fourniture d'accès à des contenus, ledit module leurre 31 étant enregistré auprès dudit dispositif 3 de fourniture d'accès à des contenus comme périphérique de reproduction virtuel.

En particulier, le signal de reproduction comporte un signal vidéo ou un signal audio. Ainsi, ce procédé peut être appliqué soit sur un contenu vidéo, soit sur un contenu audio, soit en parallèle sur le signal vidéo et le signal audio d'un contenu.

En particulier, le procédé d'accès comporte une émission C_REQ_SD d'une requête d'accès *req_acc(c)* à un contenu prédéterminé C vers le dispositif 3 de fourniture d'accès à des contenus.

En particulier, le contenu C faisant l'objet de la requête d'accès *req_acc(c)* peut être prédéterminé en fonction d'un contenu identifié c_id lors d'une sélection C_SEL soit par le client léger 10, soit par le terminal de communication 1, soit par une saisie *sel_ky* de l'utilisateur du terminal de communication 1.

En particulier, cette sélection C_SEL peut être effectué par une saisie libre d'un intitulé ou d'un identifiant d'un contenu souhaité pour par choix d'un contenu dans une liste de contenus. Une ou plusieurs listes de contenus sont présentes dans le client léger 10 (notamment dans sa zone cache ou cookie) et/ou dans le terminal de communication 1 et/ou fournies par le dispositif de fourniture d'accès à des contenus 3.

En particulier, le procédé d'accès PAC comporte une réception LIST_RC d'une liste de contenus *list_c* fournie par le dispositif 3 de fourniture d'accès à des contenus.

En particulier, le procédé d'accès PAC comporte une émission REQ_SD d'une requête d'accès *req_acc* vers un dispositif 3 de fourniture d'accès déclenchant soit la fourniture d'une liste de contenus *list_c* par le dispositif 3 de fourniture d'accès au client léger 10 et donc l'étape de réception LIST_RC de cette liste du procédé d'accès PAC, soit l'émission d'un signal de reproduction d'un contenu *sig_repro(c)* par le dispositif 3 de fourniture d'accès et l'étape de reproduction REPRO du procédé d'accès PAC.

En particulier, selon une implémentation de l'invention, les différentes étapes du procédé d'accès selon l'invention sont mises en œuvre par un logiciel ou programme d'ordinateur, ce logiciel comprenant des instructions logicielles destinées à être exécutées par un processeur de données d'un dispositif faisant partie d'un client léger d'un terminal de communication, et étant conçus pour commander l'exécution des différentes étapes de ce procédé.

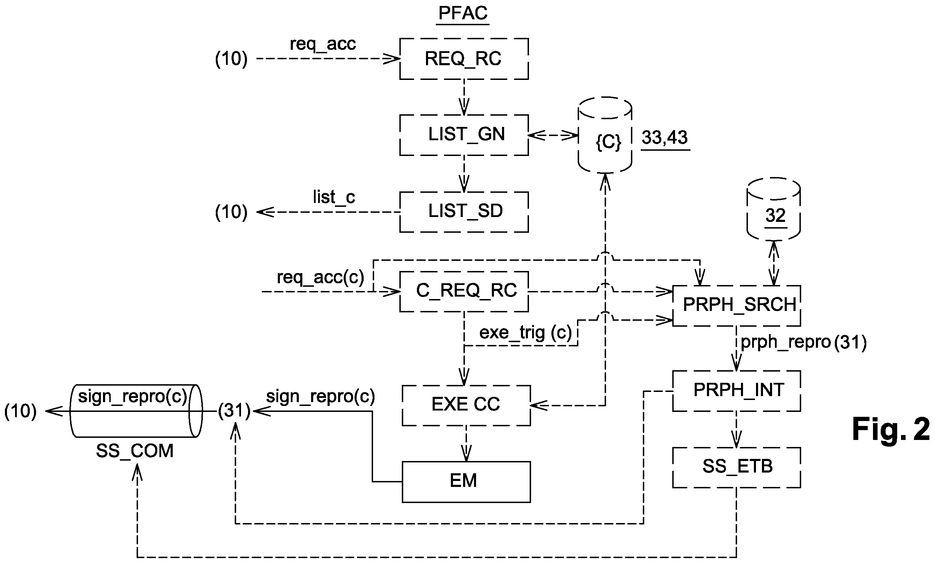

La figure 2 illustre un schéma simplifié d'un procédé de fourniture d'accès PFAC selon l'invention.

Le procédé PFAC de fourniture d'accès permet à un dispositif de fourniture d'accès à des contenus (illustré sur la figure 4, dispositif 3 de fourniture d'accès) d'un réseau de communication (illustré sur la figure 4, réseau 2) de fournir l'accès à au moins un contenu à un client léger (illustré sur la figure 4, client léger 10) d'un terminal de communication (illustré sur la figure 4, terminal 1). Le dispositif 3 de fourniture d'accès à des contenus exécute ledit contenu. Le procédé de fourniture d'accès PFAC comportant une émission EM vers ledit client léger 10 d'au moins un signal de reproduction *sig_repro(c)* d'un contenu pendant une session de communication SS_COM entre ledit dispositif 3 de fourniture d'accès à des contenus et ledit client léger 10 dudit terminal de communication1. Le signal de reproduction *sig_repro(c)* est produit par un module d'exécution (illustré sur la figure 4, module 30) dudit dispositif 3 de fourniture d'accès à des contenus et relayé sans traitement par un module leurre (illustré sur la figure 4, module 31) dudit dispositif 3 de fourniture d'accès à des contenus. Le module leurre 31 est enregistré auprès dudit dispositif 3 de fourniture d'accès à des contenus comme périphérique de reproduction virtuel.

En particulier, le signal de reproduction comporte un signal vidéo ou un signal audio. Ainsi, ce procédé peut être appliqué soit sur un contenu vidéo, soit sur un contenu audio, soit en parallèle sur le signal vidéo et le signal audio d'un contenu en utilisant notamment deux modules leurre : l'un pour la vidéo, l'autre pour l'audio.

En particulier, le procédé de fourniture d'accès PFAC comporte une réception C_REQ_RC d'une requête d'accès à un contenu *req_acc(c).* La requête d'accès *req_acc(c)* déclenche une exécution EXE(C) dudit contenu par le module d'exécution 30 produisant ledit signal de reproduction *sig-repro(c).* L'éxécution du contenu EXE(C) est notamment une étape du procédé de fourniture d'accès PFAC.

En particulier, le procédé de fourniture d'accès PFAC comporte une fourniture LIST_SD audit client léger 10 du terminal de communication distant 1 une liste *list_c* des contenus auxquels ledit dispositif 3 de fourniture d'accès fournit un accès audit client léger 10. Cette liste *list_c* permet une sélection d'au moins un contenu C par ledit client léger 10 pour requérir l'accès au contenu sélectionné *req_acc(c)* auprès dudit dispositif 3 de fourniture d'accès à des contenus.

En particulier, le procédé de fourniture d'accès PFAC comporte une réception REQ_RC d'une requête d'accès *req_acc* d'un client léger 10 déclenchant soit l'étape de fourniture d'une liste de contenus *list_c* du procédé de fourniture d'acès PFAC, soit l'étape d'émission d'un signal de reproduction d'un contenu *sig_repro(c)* du procédé de fourniture d'accès PFAC.

En particulier, la liste de contenus *list_c* fournie est notamment générée lors d'une étape de génération de listes de contenus LIST_GN du procédé de fourniture d'accès à partir d'une ou plusieurs listes existantes de contenus disponibles sur le dispositif 3 de fourniture d'accès ou de contenus accessibles par le dispositif 3 de fourniture de contenus, et/ou à partir d'une ou plusieurs bases de données de contenus 33 du dispositif 3 de fourniture d'accès ou base de données 43 accessibles par le dispositif 3 de fourniture d'accès.

En particulier, le procédé de fourniture d'accès PFAC comporte un établissement SS_ETB d'une session de communication SS_COM pendant laquelle le signal de reproduction du contenu *sig_repro(c)* est transmis vers le client léger via le module leurre 31 du dispositif 3 de fourniture d'accès.

L'établissement de la session de communication SS_ETB est déclenchée directement ou indirectement soit par la requête d'accès à un contenu *req_acc(c)* provenant d'un client léger 10, soit par la réception de cette requête d'accès C_REQ_RC, soit par le déclenchement de l'exécution du contenu *exe_trig(c)*, soit au démarrage de l'exécution EXE(C) du contenu. Notamment, lorsque l'utilisateur d'un terminal de communication 1 clique sur le bouton «jouer» d'une page HTML 5.0 coté client léger 10 (navigateur de l'utilisateur), cela déclenche l'établissement de la session SS_ETB par le dispositif de fourniture d'accès 3.

En particulier, le procédé de fourniture d'accès PFAC comporte une recherche PRPH_SRCH d'un périphérique pour la reproduction dudit signal de reproduction *sig_repro(c)* produit par le module d'exécution 30. La recherche PRPH_SRCH permet d'intégrer le module leurre 31 dans la chaine de reproduction notamment en fournissant un identifiant prph_repro(31) du module leurre 31 comme résultat de la recherche. Le procédé de fourniture d'accès PFAC recherche un périphérique notamment dans un registre de périphériques 32 du dispositif 3 de fourniture d'accès auprès duquel le module leurre 31 se sera préalablement enregistré (non illustré) comme périphérique de reproduction virtuel.

En particulier, ledit procédé de fourniture d'accès comporte une intégration PRPH_INT dudit module leurre 31 dans la chaine de reproduction du signal de reproduction *sig_repro(c)* produit par ledit module d'exécution30. L'intégration PRPH_INT du module leurre déclenche un établissement SS_ETB de ladite session de communication SS_COM entre ledit client léger 10 et ledit dispositif 3 de fourniture d'accès.

En particulier, selon une implémentation de l'invention, les différentes étapes du procédé de fourniture d'accès selon l'invention sont mises en œuvre par un logiciel ou programme d'ordinateur, ce logiciel comprenant des instructions logicielles destinées à être exécutées par un processeur de données d'un dispositif faisant partie d'un dispositif de fourniture d'accès et étant conçus pour commander l'exécution des différentes étapes de ce procédé.

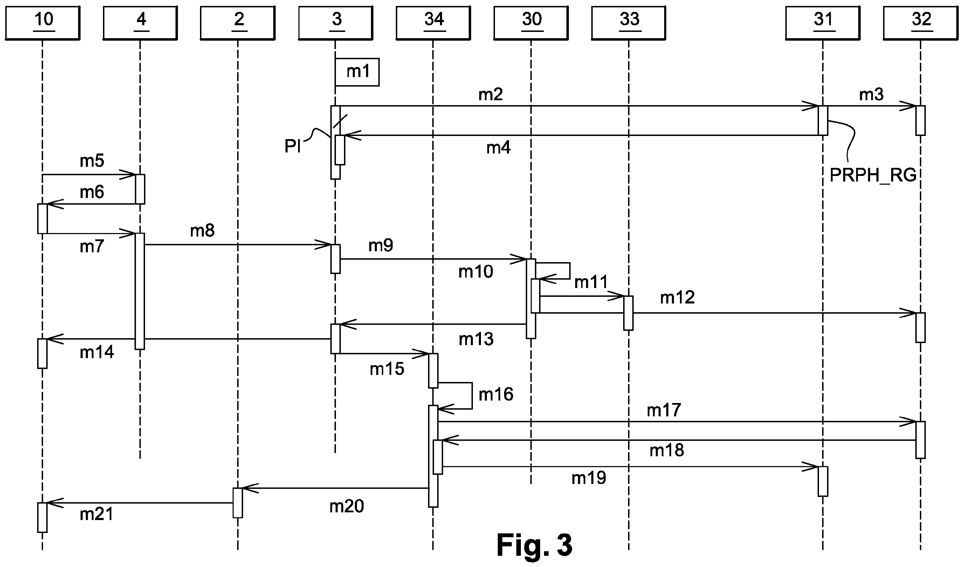

La figure 3 illustre un diagramme des échanges lors de la mise en œuvre des procédés d'accès PAC et de fourniture d'accès PFAC par respectivement le client léger 10 et le dispositif 3 de fourniture d'accès selon l'invention. A titre d'exemple, le client léger 10 illustré par la figure 3 est un client Web distant utilisant en particulier le protocole de requête HTML 5.0 et le protocole de communication sur HTML 5.0 WebRTC.

La figure 3 illustre en outre un procédé d'installation PI comportant un enregistrement PRPH_RG d'un module leurre 31, aussi nommé capteur d'écran (ScreenCapturer en anglais) dans le cas de signal vidéo, dans un registre de périphériques 32 du dispositif 3 de fourniture d'accès.

En particulier, le procédé d'installation PI comporte la réception d'une commande de démarrage *m1 :Start()* du procédé d'installation PI (le message Start() est un message de démarrage selon le protocole HTML 5.0). Le procédé d'installation PI déclenche *m2 :LaunchModule()* l'enregistrement PRPH_REG du module leurre 31.

En particulier, l'enregistrement avec succès du module leurre 31 fait l'objet d'un message m4 :OK permettant de finaliser voir clore le procédé d'installation PI.

Ainsi, lors d'une demande d'accès par un client léger 10 à un contenu mis à disposition par le dispositif 3 de fourniture d'accès, le module leurre 31 sera automatiquement mis dans la chaîne de reproduction en raison de enregistrement comme périphérique de reproduction virtuel.

Dans l'exemple illustré par la figure 3, le dispositif de fourniture d'accès à un contenu est décomposé en deux dispositifs distincts : un dispositif de fourniture de service 4 et le dispositif 3 de fourniture d'accès proprement dit, tel qu'un serveur WebSocket ou Server WebSocket en anglais. Ce dernier (le dispositif 3 de fourniture d'accès proprement dit) étant composé dans l'exemple de la figure 3 non seulement du module d'exécution 30, du module leurre 31, du registre de périphérique 32, de la base de contenus 33, mais aussi notamment d'un module de communication 34 (en l'occurrence d'un proxy WebRTC).

L'utilisateur d'un terminal de communication 1 distant (non illustré sur la figure 3) tel qu'un smartphone, un ordinateur portable connecté à un réseau de communication filaire ou non (tel que réseau mobile (3G, 4G, etc.) ou WiFi, etc.) comportant un client léger 10 souhaite accéder à partir de son terminal de communication distant à un contenu disponible soit sur un autre terminal de communication notamment à son domicile ou chez des amis ou de la famille (partage de contenus) soit sur un serveur distant (notamment dans le cadre du « cloud » c'est-à-dire d'exécution par des équipements du réseau de communication).

Prenons, l'exemple d'un joueur souhaitant accéder à un jeu sur un serveur distant 3 : le serveur 3 exécutant le jeu afin de réduire pour le terminal du client les coûts de calculs. Le jeu est donc exécuté dans le « nuage » : on parle aussi en anglais de cloud gaming.

Le client léger 10 envoie une demande d'accès au service d'accès aux contenus *m5 : getService()* soit directement au dispositif 3 de fourniture d'accès, soit à un dispositif 4 de fournitures de services 4 tel qu'un dispositif portail Web ou ServerWebPortal en anglais (comme l'illustre la figure 3). En réponse à cette demande *m5*, le client léger reçoit un message comportant notamment une liste de contenus disponibles notamment sous la forme d'une page HTML tel que *m6 : ok : parametre pageHTML().* Cette liste *m6* permet au client léger de requérir l'accès à un jeu prédéterminé notamment en fournissant des paramètres du jeu tel que le nom du jeu, l'identifiant de l'utilisateur du terminal en tant que client du jeu... *m7 : getJeu : parametre NomJeu, IDClient().*

Le dispositif 3 de fourniture d'accès recevoir cette requête d'accès au jeu *m8 : getJeu : parametre NomJeu, IDClient(),* éventuellement relayé par un dispositif de fourniture de services 4, déclenche *m9 : getJeu : parametre NomJeu, IDClient()*l'exécution du jeu par un module d'exécution 30 aussi nommé, dans notre exemple, dispositif de gestion de jeu ou GameManager en anglais.

Le module d'exécution 30 recherche l'emplacement du jeu dont l'accès est requis m10 : getEmplacement : parametre NomJeu() puis exécute le jeu m11 :lancerJeu() en lisant le jeu dans la base de données de contenus 33.

Le démarrage de l'exécution du jeu déclenche l'inscription du jeu dans le registre 32 des périphériques du dispositif de fourniture d'accès et l'envoi d'un message de confirmation du démarrage du jeu *m13 : ok()* par le module d'exécution 30. Ainsi, le dispositif 3 de fourniture d'accès étant informé du démarrage du jeu *m13 : ok()* envoi au client léger 10 via le protocole HTML 5.0 des informations concernant la reproduction, en l'occurrence vidéo, du jeu *m14 : OK : parametre : taille, emplacement visuel sur le serveur ()*. En parallèle, le dispositif 3 de fourniture d'accès déclenche la transmission *m15: launchStreaming(,)* notamment auprès du module de communication 34, permettant l'établissement de la session de communication WebRTC entre le dispositif 3 de fourniture d'accès et le client léger 10 *m20 : getPeerConnection(), m21 :setPeerconnection()* (en particulier via un pair de connexion ou PeerConnectionServer en anglais).

Le déclenchement de la transmission *m15* commande *m16 :getUserMedia()* la recherche d'un périphérique de reproduction, en l'occurrence video m17 :getPeripherique() auprès du registre 32. Le registre 32 fournit *m18 : Peripherique : screencapturer()* notamment un identifiant du module leurre 31 comme périphérique adapté à cette chaine de reproduction impliquant un client léger distant 10.

Le dispositif 3 de fourniture d'accès voire, comme l'illustre la figure 3, le module de communication 34 du dispositif 3 de fourniture d'accès commande *m19: Peripherique integre()* une intégration du module leurre ainsi identifié dans la chaine de reproduction.

Ainsi, le signal de reproduction (non illustré sur la figure 3), en l'occurrence vidéo, produit par le module d'exécution 33 lors de l'exécution du jeu, sera émis par le module d'éxécution 33 vers le module leurre 31 que le module d'exécution prend pour un périphérique de reproduction en raison de son enregistrement en tant que tel dans le registre de périphérique 32.

Le module leurre 30 recevant le signal de reproduction le relaie via la session de communication, en l'occurrence WebRTC, vers le client léger 10 qui assimile le module leurre 31 à un périphérique local du client léger 10, en l'occurrence à une caméra.

Dans le cas du jeu, il est notamment envisagé d'intégrer plusieurs modules leurre (non illustré) : par exemple, un par signal de reproduction produit lors de l'exécution du contenu, en l'occurrence du jeu : un module leurre vidéo pour le signal vidéo et un module leurre audio pour le signal audio. Les deux signaux peuvent être transmis dans une seule et même session de communication ou dans des sessions de communication distinctes.

La figure 4 illustre une architecture de communication mettant en œuvre l'invention.

L'architecture comporte un terminal de communication distant 1 comportant un client léger 10 apte à reproduire au moins un signal de reproduction d'un contenu *sig_repro(c).* Le signal de reproduction *sig_repro(c)* est reçu par le client léger 10 pendant une session de communication SS_COM avec un dispositif 3 de fourniture d'accès à des contenus. Le signal de reproduction *sig_repro(c)* est produit par un module d'exécution 30 dudit dispositif 3 de fourniture d'accès à des contenus et relayé sans traitement par un module leurre 31 dudit dispositif 3 de fourniture d'accès à des contenus. Le module leurre 31 est enregistré auprès dudit dispositif 3 de fourniture d'accès à des contenus comme périphérique de reproduction virtuel.

En particulier, le client léger 10 comporte des moyens de reproduction 100 d'au moins un signal de reproduction d'un contenu *sig_repro(c).*

L'architecture comporte un dispositif 3 de fourniture d'accès à des contenus comportant un module d'exécution 30 d'au moins un contenu produisant au moins un signal de reproduction dudit contenu *sig_repro(c)* et un module leurre 31 enregistré comme périphérique de reproduction virtuel auprès dudit dispositif 3 de fourniture d'accès.

Le module leurre 31 est apte à relayer sans traitement des signaux de reproduction. Il comporte des moyens d'enregistrement (non illustré) dudit module leurre 31 auprès d'un dispositif 3 de fourniture d'accès à des contenus comme périphérique de reproduction virtuel. Le dispositif 3 de fourniture d'accès comporte, en particulier, un registre de périphériques auprès duquel le module leurre 31 est enregistré comme périphérique de reproduction virtuel pour les demandes d'accès distantes à partir d'un client léger.

En particulier, le module d'exécution 30 exécute un contenu soit d'une base de données de contenus 43 accessibles par le dispositif 3 de fourniture d'accès, soit une base de données de contenus 33 du dispositif 3 de fourniture d'accès.

Le dispositif 3 de fourniture d'accès, notamment un serveur média, est connecté à un module de communication (tel que le module 34 illustré par la figure3), notamment une passerelle WebRTC sur le réseau domestique (Home Network en anglais). Ce dispositif 3 de fourniture d'accès est vu par le module de communication comme une webcam USB locale.

Le dispositif 3 de fourniture d'accès fournit, notamment, la liste des contenus audio et video au module de communication. Cette liste est, en particulier, intégrée dans un composant HTML de telle sorte que l'utilisateur puisse à partir de n'importe où et de n'importe quel terminal de communication reproduire le contenu choisi.

Pour les contenus de type jeux, un module utilisant notamment Microsoftdirectshow API permettant d'exécuter le jeu est vu par le module de communication 34 comme une webCam USB locale.

Cette solution permet au module de communication de transmettre le contenu sans transcodage.

L'invention vise aussi des supports. Le support d'informations peut être n'importe quelle entité ou dispositif capable de stocker un programme selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

## Revendications

1. Procédé d'accès à au moins un contenu à partir d'un client léger d'un terminal de communication distant, tel que le procédé d'accès est configuré pour accéder au moyen du client léger du terminal de communication distant à un contenu mis à disposition par un dispositif de fourniture d'accès à des contenus, ledit contenu étant exécuté par un dispositif de fourniture d'accès à des contenus d'un réseau de communication, ledit procédé d'accès comportant :
- une réception par ledit client léger du terminal de communication distant d'au moins un signal de reproduction d'un contenu du dispositif de fourniture d'accès à des contenus via le réseau de communication,
∘ ledit signal de reproduction du contenu étant reçu, via le réseau de communication, d'un module leurre du dispositif de fourniture d'accès au contenu par le client léger du terminal de communication distant pendant une session de communication entre le terminal de communication distant et ledit dispositif de fourniture d'accès au contenu,
∘ ledit signal de reproduction du contenu étant produit par un module d'exécution dudit dispositif de fourniture d'accès au pendant l'exécution du contenu et
∘ ledit signal de reproduction du contenu étant fourni par le module d'exécution pour être reproduit par le module leurre agissant comme un périphérique de reproduction virtuel et étant relayé, sans traitement par le module leurre dudit dispositif de fourniture d'accès à des contenus, au client léger du terminal de communication distant, ledit module leurre étant enregistré comme un périphérique de reproduction virtuel auprès dudit dispositif de fourniture d'accès à des contenus dans une base de données d'enregistrement du dispositif de fourniture d'accès à des contenus ;
- une reproduction, par ledit client léger du terminal de communication distant, du signal de reproduction du contenu reçu.

2. Procédé d'accès selon la revendication précédente tel que ledit au moins un signal de reproduction comporte un signal vidéo ou un signal audio.

3. Programme comprenant des instructions de code de programme pour l'exécution des étapes du procédé d'accès selon l'une quelconque des revendications précédentes lorsque ledit programme est exécuté par un processeur.

4. Procédé de fourniture d'accès à au moins un contenu à un client léger d'un terminal de communication distant, tel que le procédé de fourniture d'accès est apte à fournit l'accès au contenu par un dispositif de fourniture d'accès à des contenus d'un réseau de communication, ledit dispositif de fourniture d'accès à des contenus exécutant ledit contenu, ledit procédé de fourniture d'accès comportant
- une exécution d'un contenu par un module d'exécution du dispositif de fourniture d'accès à des contenus pour produire un signal de reproduction du contenu
- une émission du signal de reproduction du contenu au client léger du terminal de communication distant du signal de reproduction du contenu par le dispositif de fourniture d'accès à des contenus via le réseau de communication,
le signal de reproduction du contenu étant fourni, via la réseau de communication par un module leurre du dispositif de fourniture d'accès au contenu au client léger du terminal de communication distant pendant une session de communication entre le terminal de communication distant et le dispositif de fourniture d'accès au contenu, le signal de reproduction du contenu étant fourni par le module d'exécution pour être reproduit par le module leurre agissant comme un périphérique de reproduction virtuel; et
l'émission relayant, sans traitement par le module leurre du dispositif de fourniture d'accès à des contenus, vers ledit client léger du terminal de communication distant le signal de reproduction du contenu via le réseau de communication , ledit module leurre étant enregistré comme un périphérique de reproduction virtuel auprès dudit dispositif de fourniture d'accès à des contenus dans une base de données d'enregistrement du dispositif de fourniture d'accès à des contenus, le signal de reproduction relayé étant reproduit par le client léger du terminal de communication distant.

5. Procédé de fourniture d'accès selon la revendication précédente tel que ledit procédé de fourniture d'accès comporte une fourniture audit client léger du terminal de communication distant une liste des contenus auxquels ledit dispositif de fourniture d'accès fournit un accès audit client léger permettant une sélection d'au moins un contenu par ledit client léger pour requérir l'accès au contenu sélectionné auprès dudit dispositif de fourniture d'accès à des contenus.

6. Procédé de fourniture d'accès selon l'une des revendications 4 ou 5 tel que ledit procédé de fourniture d'accès comporte une réception d'une requête d'accès à un contenu dudit dispositif de fourniture d'accès à des contenus, ladite requête d'accès déclenchant une exécution dudit contenu par ledit module d'exécution produisant ledit signal de reproduction.

7. Procédé de fourniture d'accès selon l'une des revendications 4 ou 5 tel que ledit procédé de fourniture d'accès comporte une recherche d'un périphérique pour la reproduction dudit signal de reproduction produit par le module d'exécution intégrant le module leurre dans la chaine de reproduction.

8. Procédé de fourniture d'accès selon l'une des revendications ou 5 tel que ledit procédé de fourniture d'accès comporte une intégration dudit module leurre dans la chaine de reproduction du signal de reproduction produit par ledit module d'exécution, ladite intégration du module leurre déclenchant un établissement de ladite session de communication entre ledit client léger et ledit dispositif de fourniture d'accès.

9. Programme comprenant des instructions de code de programme pour l'exécution des étapes du procédé de fourniture d'accès selon l'une quelconque des revendications 4 à 8 lorsque ledit programme est exécuté par un processeur.

10. Procédé d'installation d'un dispositif de fourniture d'accès à des contenus, ledit dispositif de fourniture d'accès étant apte à :
- établir une session de communication avec un client léger d'un terminal de communication via un réseau de communication, et
- exécuter un contenu ledit procédé d'installation comporte un enregistrement d'un module leurre auprès dudit dispositif de fourniture d'accès comme périphérique de reproduction virtuel auprès dudit dispositif de fourniture d'accès à des contenus dans une base de données d'enregistrement du dispositif de fourniture d'accès à des contenus, ledit module leurre étant apte à relayer, sans traitement par le module leurre du dispositif de fourniture d'accès à des contenus, un signal de reproduction d'un contenu vers un client léger d'un terminal de communication distant via le réseau de communication pendant une session de communication entre ledit dispositif de fourniture d'accès au contenu et ledit client léger du terminal distant, le signal de reproduction du contenu étant produit par un module d'exécution dudit dispositif de fourniture d'accès exécutant le contenu, le module d'exécution étant configuré pour fournir le signal de reproduction du contenu au module leurre pour être reproduit par le module leurre agissant comme un périphérique de reproduction virtuel.

11. Programme comprenant des instructions de code de programme pour l'exécution des étapes du procédé d'installation selon la revendication précédente lorsque ledit programme est exécuté par un processeur.

12. Module leurre d'un dispositif de fourniture d'accès à des contenus, le dispositif de fourniture d'accès étant apte à fournir l'accès à au moins un contenu à un client léger d'un terminal de communication distant d'un réseau de communication, ledit dispositif de fourniture d'accès à des contenus exécutant ledit contenu, le module leurre comportant :
- des moyens d'enregistrement dudit module leurre auprès d'un dispositif de fourniture d'accès à des contenus comme périphérique de reproduction virtuel auprès dudit dispositif de fourniture d'accès à des contenus dans une base de données d'enregistrement du dispositif de fourniture d'accès à des contenus, et
- des moyens d'émission d'un signal de reproduction du contenu à un client léger d'un terminal de communication distant d'un signal de reproduction d'un contenu par le dispositif de fourniture d'accès à des contenus via un réseau de communication,
le signal de reproduction du contenu étant fourni, via la réseau de communication par un module leurre du dispositif de fourniture d'accès au contenu au client léger du terminal de communication distant pendant une session de communication entre le terminal de communication distant et le dispositif de fourniture d'accès au contenu, le signal de reproduction du contenu étant fourni par un module d'exécution pour être reproduit par le module leurre agissant comme un périphérique de reproduction virtuel; et
les moyens d'émission étant apte à relayer, sans traitement par le module leurre du dispositif de fourniture d'accès à des contenus, le signal de reproduction du contenu au client léger du terminal de communication distant via le réseau de communication, le signal de reproduction relayé étant reproduit par le client léger du terminal de communication distant.

13. Dispositif de fourniture d'accès à des contenus apte à fournir l'accès à au moins un contenu à un client léger d'un terminal de communication distant par un dispositif de fourniture d'accès à des contenus d'un réseau de communication, ledit dispositif de fourniture d'accès à des contenus exécutant ledit contenu, le dispositif de fourniture d'accès à des contenus comportant :
- un module d'exécution d'au moins un contenu produisant au moins un signal de reproduction dudit contenu et
- un module leurre enregistré comme périphérique de reproduction virtuel auprès dudit dispositif de fourniture d'accès dans une base de données d'enregistrement du dispositif de fourniture d'accès à des contenus, ledit module leurre étant apte à relayer, sans traitement par le module leurre du dispositif de fourniture d'accès à des contenus, ledit signal de reproduction du contenu vers le client léger du terminal de communication via le réseau de communication via le réseau de communication pendant une session de communication entre ledit client léger et ledit dispositif de fourniture d'accès, le signal de reproduction du contenu étant fourni par le module d'exécution pour être reproduit par le module leurre agissant comme un périphérique de reproduction virtuel.

## Patentansprüche

1. Verfahren zum Zugriff auf wenigstens einen Inhalt von einem Thin Client eines entfernten Kommunikationsendgerätes aus, wobei das Zugriffsverfahren dafür ausgelegt ist, mittels des Thin Client des entfernten Kommunikationsendgerätes auf einen Inhalt zuzugreifen, der von einer Vorrichtung zur Bereitstellung eines Zugangs zu Inhalten zur Verfügung gestellt wird, wobei der Inhalt von einer Vorrichtung zur Bereitstellung eines Zugangs zu Inhalten eines Kommunikationsnetzes ausgeführt wird, wobei das Verfahren zum Zugriff umfasst:
- einen Empfang, durch den Thin Client des entfernten Kommunikationsendgerätes, wenigstens eines Signals zur Wiedergabe eines Inhalts von der Vorrichtung zur Bereitstellung eines Zugangs zu Inhalten über das Kommunikationsnetz,
∘ wobei das Signal zur Wiedergabe des Inhalts über das Kommunikationsnetz, von einem Lockmodul der Vorrichtung zur Bereitstellung eines Zugangs zum Inhalt kommend, durch den Thin Client des entfernten Kommunikationsendgerätes während einer Kommunikationssitzung zwischen dem entfernten Kommunikationsendgerät und der Vorrichtung zur Bereitstellung eines Zugangs zum Inhalt empfangen wird,
∘ wobei das Signal zur Wiedergabe des Inhalts von einem Ausführungsmodul der Vorrichtung zur Bereitstellung eines Zugangs während der Ausführung des Inhalts erzeugt wird, und
∘ wobei das Signal zur Wiedergabe des Inhalts von dem Ausführungsmodul geliefert wird, um durch das Lockmodul wiedergegeben zu werden, das als eine virtuelle Wiedergabeperipherie agiert, und ohne Verarbeitung durch das Lockmodul der Vorrichtung zur Bereitstellung eines Zugangs zu Inhalten an den Thin Client des entfernten Kommunikationsendgerätes weitergeleitet wird, wobei das Lockmodul bei der Vorrichtung zur Bereitstellung eines Zugangs zu Inhalten als eine virtuelle Wiedergabeperipherie in einer Registrierungsdatenbank der Vorrichtung zur Bereitstellung eines Zugangs zu Inhalten registriert wird;
- eine Wiedergabe, durch den Thin Client des entfernten Kommunikationsendgerätes, des empfangenen Signals zur Wiedergabe des Inhalts.

2. Verfahren zum Zugriff nach dem vorhergehenden Anspruch, wobei das wenigstens eine Wiedergabesignal ein Videosignal oder ein Audiosignal umfasst.

3. Programm, welches Programmcodeanweisungen zur Ausführung der Schritte des Verfahrens zum Zugriff nach einem der vorhergehenden Ansprüche, wenn das Programm von einem Prozessor ausgeführt wird, umfasst.

4. Verfahren zur Bereitstellung eines Zugangs zu wenigstens einem Inhalt für einen Thin Client eines entfernten Kommunikationsendgerätes, wobei das Verfahren zur Bereitstellung eines Zugangs geeignet ist, den Zugang zum Inhalt durch eine Vorrichtung zur Bereitstellung eines Zugangs zu Inhalten eines Kommunikationsnetzes bereitzustellen, wobei die Vorrichtung zur Bereitstellung eines Zugangs zu Inhalten den Inhalt ausführt, wobei das Verfahren zur Bereitstellung eines Zugangs umfasst:
- eine Ausführung eines Inhalts durch ein Ausführungsmodul der Vorrichtung zur Bereitstellung eines Zugangs zu Inhalten, um ein Signal zur Wiedergabe des Inhalts zu erzeugen;
- ein Senden des Signals zur Wiedergabe des Inhalts an den Thin Client des entfernten Kommunikationsendgerätes durch die Vorrichtung zur Bereitstellung eines Zugangs zu Inhalten über das Kommunikationsnetz,
wobei das Signal zur Wiedergabe des Inhalts über das Kommunikationsnetz durch ein Lockmodul der Vorrichtung zur Bereitstellung eines Zugangs zum Inhalt an den Thin Client des entfernten Kommunikationsendgerätes während einer Kommunikationssitzung zwischen dem entfernten Kommunikationsendgerät und der Vorrichtung zur Bereitstellung eines Zugangs zum Inhalt geliefert wird, wobei das Signal zur Wiedergabe des Inhalts von dem Ausführungsmodul geliefert wird, um von dem Lockmodul, das als eine virtuelle Wiedergabeperipherie agiert, wiedergegeben zu werden; und
wobei das Senden das Weiterleiten, ohne Verarbeitung durch das Lockmodul der Vorrichtung zur Bereitstellung eines Zugangs zu Inhalten, des Signals zur Wiedergabe des Inhalts an den Thin Client des entfernten Kommunikationsendgerätes über das Kommunikationsnetz beinhaltet, wobei das Lockmodul bei der Vorrichtung zur Bereitstellung eines Zugangs zu Inhalten als eine virtuelle Wiedergabeperipherie in einer Registrierungsdatenbank der Vorrichtung zur Bereitstellung eines Zugangs zu Inhalten registriert wird, wobei das weitergeleitete Wiedergabesignal durch den Thin Client des entfernten Kommunikationsendgerätes wiedergegeben wird.

5. Verfahren zur Bereitstellung eines Zugangs nach dem vorhergehenden Anspruch, wobei das Verfahren zur Bereitstellung eines Zugangs eine Bereitstellung, für den Thin Client des entfernten Kommunikationsendgerätes, einer Liste der Inhalte zu denen die Vorrichtung zur Bereitstellung eines Zugangs einen Zugang für den Thin Client bereitstellt, umfasst, die eine Auswahl wenigstens eines Inhalts durch den Thin Client ermöglicht, um den Zugang zu dem ausgewählten Inhalt bei der Vorrichtung zur Bereitstellung eines Zugangs zu Inhalten anzufordern.

6. Verfahren zur Bereitstellung eines Zugangs nach einem der Ansprüche 4 oder 5, wobei das Verfahren zur Bereitstellung eines Zugangs einen Empfang einer Anforderung eines Zugangs zu einem Inhalt der Vorrichtung zur Bereitstellung eines Zugangs zu Inhalten umfasst, wobei diese Zugangsanforderung eine Ausführung des Inhalts durch das Ausführungsmodul auslöst, welches das Wiedergabesignal erzeugt.

7. Verfahren zur Bereitstellung eines Zugangs nach einem der Ansprüche 4 oder 5, wobei das Verfahren zur Bereitstellung eines Zugangs eine Suche nach einer Peripherie für die Wiedergabe des von dem Ausführungsmodul erzeugten Wiedergabesignals umfasst, welche das Lockmodul in die Wiedergabekette integriert.

8. Verfahren zur Bereitstellung eines Zugangs nach einem der Ansprüche 4 oder 5, wobei das Verfahren zur Bereitstellung eines Zugangs eine Integration des Lockmoduls in die Wiedergabekette des von dem Ausführungsmodul erzeugten Wiedergabesignals umfasst, wobei die Integration des Lockmoduls eine Einrichtung der Kommunikationssitzung zwischen dem Thin Client und der Vorrichtung zur Bereitstellung eines Zugangs auslöst.

9. Programm, welches Programmcodeanweisungen zur Ausführung der Schritte des Verfahrens zur Bereitstellung eines Zugangs nach einem der Ansprüche 4 bis 8, wenn das Programm von einem Prozessor ausgeführt wird, umfasst.

10. Verfahren zur Installation einer Vorrichtung zur Bereitstellung eines Zugangs zu Inhalten, wobei die Vorrichtung zur Bereitstellung eines Zugangs geeignet ist:
- eine Kommunikationssitzung mit einem Thin Client eines Kommunikationsendgerätes über ein Kommunikationsnetz einzurichten, und
- einen Inhalt auszuführen,
wobei das Verfahren zur Installation eine Registrierung eines Lockmoduls bei der Vorrichtung zur Bereitstellung eines Zugangs als virtuelle Wiedergabeperipherie bei der Vorrichtung zur Bereitstellung eines Zugangs zu Inhalten in einer Registrierungsdatenbank der Vorrichtung zur Bereitstellung eines Zugangs zu Inhalten umfasst, wobei das Lockmodul geeignet ist, ohne Verarbeitung durch das Lockmodul der Vorrichtung zur Bereitstellung eines Zugangs zu Inhalten ein Signal zur Wiedergabe eines Inhalts an einen Thin Client eines entfernten Kommunikationsendgerätes über das Kommunikationsnetz während einer Kommunikationssitzung zwischen der Vorrichtung zur Bereitstellung eines Zugangs zum Inhalt und dem Thin Client des entfernten Endgerätes weiterzuleiten, wobei das Signal zur Wiedergabe des Inhalts von einem Ausführungsmodul der Vorrichtung zur Bereitstellung eines Zugangs erzeugt wird, das den Inhalt ausführt, wobei das Ausführungsmodul dafür ausgelegt ist, das Signal zur Wiedergabe des Inhalts an das Lockmodul zu liefern, um von dem Lockmodul, das als eine virtuelle Wiedergabeperipherie agiert, wiedergegeben zu werden.

11. Programm, welches Programmcodeanweisungen zur Ausführung der Schritte des Verfahrens zur Installation nach dem vorhergehenden Anspruch, wenn das Programm von einem Prozessor ausgeführt wird, umfasst.

12. Lockmodul einer Vorrichtung zur Bereitstellung eines Zugangs zu Inhalten, wobei die Vorrichtung zur Bereitstellung eines Zugangs geeignet ist, den Zugang zu wenigstens einem Inhalt für einen Thin Client eines entfernten Kommunikationsendgerätes eines Kommunikationsnetzes bereitzustellen, wobei die Vorrichtung zur Bereitstellung eines Zugangs zu Inhalten den Inhalt ausführt, wobei das Lockmodul aufweist:
- Mittel zur Registrierung des Lockmoduls bei einer Vorrichtung zur Bereitstellung eines Zugangs zu Inhalten als virtuelle Wiedergabeperipherie bei der Vorrichtung zur Bereitstellung eines Zugangs zu Inhalten in einer Registrierungsdatenbank der Vorrichtung zur Bereitstellung eines Zugangs zu Inhalten, und
- Mittel zum Senden eines Signals zur Wiedergabe des Inhalts an einen Thin Client eines entfernten Kommunikationsendgerätes durch die Vorrichtung zur Bereitstellung eines Zugangs zu Inhalten über ein Kommunikationsnetz,
wobei das Signal zur Wiedergabe des Inhalts über das Kommunikationsnetz durch ein Lockmodul der Vorrichtung zur Bereitstellung eines Zugangs zum Inhalt an den Thin Client des entfernten Kommunikationsendgerätes während einer Kommunikationssitzung zwischen dem entfernten Kommunikationsendgerät und der Vorrichtung zur Bereitstellung eines Zugangs zum Inhalt geliefert wird, wobei das Signal zur Wiedergabe des Inhalts von dem Ausführungsmodul geliefert wird, um von dem Lockmodul, das als eine virtuelle Wiedergabeperipherie agiert, wiedergegeben zu werden; und
wobei die Mittel zum Senden geeignet sind, ohne Verarbeitung durch das Lockmodul der Vorrichtung zur Bereitstellung eines Zugangs zu Inhalten das Signal zur Wiedergabe des Inhalts an den Thin Client des entfernten Kommunikationsendgerätes über das Kommunikationsnetz weiterzuleiten, wobei das weitergeleitete Wiedergabesignal durch den Thin Client des entfernten Kommunikationsendgerätes wiedergegeben wird.

13. Vorrichtung zur Bereitstellung eines Zugangs zu Inhalten, welche geeignet ist, den Zugang zu wenigstens einem Inhalt für einen Thin Client eines entfernten Kommunikationsendgerätes durch eine Vorrichtung zur Bereitstellung eines Zugangs zu Inhalten eines Kommunikationsnetzes bereitzustellen, wobei die Vorrichtung zur Bereitstellung eines Zugangs zu Inhalten den Inhalt ausführt, wobei die Vorrichtung zur Bereitstellung eines Zugangs zu Inhalten aufweist:
- ein Modul zur Ausführung wenigstens eines Inhalts, das wenigstens ein Signal zur Wiedergabe des Inhalts erzeugt, und
- ein Lockmodul, das bei der Vorrichtung zur Bereitstellung eines Zugangs als virtuelle Wiedergabeperipherie in einer Registrierungsdatenbank der Vorrichtung zur Bereitstellung eines Zugangs zu Inhalten registriert ist, wobei das Lockmodul geeignet ist, das Signal zur Wiedergabe des Inhalts ohne Verarbeitung durch das Lockmodul der Vorrichtung zur Bereitstellung eines Zugangs zu Inhalten an den Thin Client des Kommunikationsendgerätes über das Kommunikationsnetz während einer Kommunikationssitzung zwischen dem Thin Client und der Vorrichtung zur Bereitstellung eines Zugangs weiterzuleiten, wobei das Signal zur Wiedergabe des Inhalts von dem Ausführungsmodul geliefert wird, um von dem Lockmodul, das als eine virtuelle Wiedergabeperipherie agiert, wiedergegeben zu werden.

## Claims

1. Method for accessing at least one content from a thin client of a remote communication terminal, such that the access method is configured to access, by means of the thin client of the remote communication terminal, a content made available by a device for providing access to content, said content being executed by a device for providing access to content of a communication network, said access method including:
- receiving by said thin client of the remote communication terminal at least a content reproduction signal from the device for providing access to content over the communication network,
o said content reproduction signal being received, over the communication network, from a decoy module of the device for providing access to the content by the thin client of the remote communication terminal during a communication session between the remote communication terminal and said device for providing access to the content,
∘ said content reproduction signal being produced by an execution module of said device for providing access to content upon the execution of the content, and
∘ said content reproduction signal being provided by the execution module to be reproduced by the decoy module acting as a virtual reproduction peripheral, and being relayed to the thin client of the remote communication terminal, without processing by the decoy module of said device for providing access to content, said decoy module being registered as a virtual reproduction peripheral with said device for providing access to content in a registration database of the device for providing access to content;
- reproducing, by said thin client of the remote communication terminal, the received content reproduction signal.

2. Access method according to the preceding claim, such that said at least one reproduction signal includes a video signal or an audio signal.

3. Program comprising program code instructions for executing the steps of the access method according to either one of the preceding claims when said program is executed by a processor.

4. Method for providing access to at least one content to a thin client of a remote communication terminal, such that the access provision method is capable of providing access to the content by means of a device for providing access to content of a communication network, said device for providing access to content executing said content, said access provision method including:
- executing a content by an execution module of the device for providing access to content to produce a reproduction signal for the content,
- sending the content reproduction signal to the thin client of the remote communication terminal by the device for providing access to content over the communication network,
the content reproduction signal being provided, over the communication network, by a decoy module of the device for providing access to the content to the thin client of the remote communication terminal during a communication session between the remote communication terminal and the device for providing access to the content,
the content reproduction signal being provided by the execution module for reproduction by the decoy module acting as a virtual reproduction peripheral, and
the sending relaying, without processing by the decoy module of the device for providing access to content, to said thin client of the remote communication terminal the content reproduction signal over the communication network, said decoy module being registered as a virtual reproduction peripheral with said device for providing access to content in a registration database of the device for providing access to content, the relayed reproduction signal being reproduced by the thin client of the remote communication terminal.

5. Access provision method according to the preceding claim, such that said access provision method includes providing said thin client of the remote communication terminal with a list of the content to which said access provision device provides access to said thin client, allowing a selection of at least one content by said thin client to request access to the selected content from said device for providing access to content.

6. Access provision method according to either of Claims 4 and 5, such that said access provision method includes receiving a request to access a content of said device for providing access to content, said access request triggering an execution of said content by said execution module, producing said reproduction signal.

7. Access provision method according to either of Claims 4 and 5, such that said access provision method includes searching for a peripheral for reproducing said reproduction signal produced by the execution module, integrating the decoy module into the reproduction chain.

8. Access provision method according to either of Claims 4 and 5, such that said access provision method includes inserting said decoy module into the reproduction chain of the reproduction signal produced by said execution module, said insertion of the decoy module triggering an establishment of said communication session between said thin client and said access provision device.

9. Program comprising program code instructions for executing the steps of the access provision method according to any one of Claims 4 to 8 when said program is executed by a processor.

10. Method for installing a device for providing access
to content, said access provision device being capable of:
- establishing a communication session with a thin client of a communication terminal over a communication network, and
- executing a content,
said installation method including registering a decoy module with said access provision device as a virtual reproduction peripheral with said device for providing access to content in a registration database of the device for providing access to content, said decoy module being configured to relay, without processing by the decoy module of the device for providing access to content, a content reproduction signal to a thin client of a remote communication terminal over the communication network during a communication session between said device for providing access to the content and said thin client of the remote terminal, the content reproduction signal being produced by an execution module of said access provision device, which executes the content, the execution module being configured to provide the content reproduction signal to the decoy module for reproduction by the decoy module acting as a virtual reproduction peripheral.

11. Program comprising program code instructions for executing the steps of the installation method according to the preceding claim when said program is executed by a processor.

12. Decoy module of a device for providing access to content, the access provision device being capable of providing access to at least one content to a thin client of a remote communication terminal of a communication network, said device for providing access to content executing said content, the decoy module including:
- means for registering said decoy module with a device for providing access to content as a virtual reproduction peripheral with said device for providing access to content in a registration database of the device for providing access to content, and
- means for sending a content reproduction signal to a thin client of a remote communication terminal, by means of the device for providing access to content, over a communication network,
the content reproduction signal being provided, over the communication network, by a decoy module of the device for providing access to the content to the thin client of the remote communication terminal during a communication session between the remote communication terminal and the device for providing access to the content,
the content reproduction signal being provided by an execution module for reproduction by the decoy module acting as a virtual reproduction peripheral, and
the sending means being capable of relaying, without processing by the decoy module of the device for providing access to content, the content reproduction signal to the thin client of the remote communication terminal over the communication network, the relayed reproduction signal being reproduced by the thin client of the remote communication terminal.

13. Device for providing access to content capable of providing access to at least one content to a thin client of a remote communication terminal by means of a device for providing access to content of a communication network, said device for providing access to content executing said content, the device for providing access to content including:
- an execution module for executing at least one content, producing at least one reproduction signal for said content, and
- a decoy module registered as a virtual reproduction peripheral with said access provision device in a registration database of the device for providing access to content, said decoy module being capable of relaying, without processing by the decoy module of the device for providing access to content, during a communication session between said thin client and said access provision device, the content reproduction signal being provided by the execution module for reproduction by the decoy module acting as a virtual reproduction peripheral.
